# EUROPÄISCHE PATENTSCHRIFT

(11) **EP 3 372 316 B1**
(45) Veröffentlichungstag und Bekanntmachung des Hinweises auf die Patenterteilung: **10.05.2023**
(21) Anmeldenummer: 18160070.1
(22) Anmeldetag: 06.03.2018
(51) Int. Cl.: B25J 9/16, B25J 19/06, F24D 17/00, F24H 9/20, F24H 1/10, F21S 9/04, F21V 23/00, F21V 33/00, F21Y 113/17, F21Y 115/10

(54) **VORRICHTUNG ZUR FLUIDSTROMÜBERWACHUNG, WASSERZAPFSTELLE MIT EINER SOLCHEN UND VERFAHREN ZUM BETRIEB DER WASSERZAPFSTELLE**
DEVICE FOR FLUID FLOW MONITORING, WATER TAPPING POINT COMPRISING SUCH A DEVICE, AND METHOD FOR OPERATING THE WATER TAPPING POINT
DISPOSITIF DE SURVEILLANCE DE FLUX DE FLUIDE, BOUCHE POURVUE D'UN TEL DISPOSITIF ET PROCÉDÉ DE FONCTIONNEMENT DE LA BOUCHE

(30) Priorität: 10.03.2017 DE 102017003989
(43) Veröffentlichungstag der Anmeldung: 12.09.2018
(73) Patentinhaber: Robert Bosch GmbH, 70442 Stuttgart (DE)
(72) Erfinder: Kalk, Hendrik Johannes, 7421AZ Deventer (NL)

(56) Entgegenhaltungen:
- DE-A1- 10 145 512
- DE-A1-102006 032 007
- DE-A1-102009 004 283
- DE-U1-202009 003 820
- US-A- 4 854 499

## Beschreibung

### Stand der Technik

Die Erfindung betrifft eine Vorrichtung zur Fluidstromüberwachung gemäß Anspruch 1, eine Wasserzapfstelle mit einer solchen gemäß Anspruch 7 und ein Verfahren zum Betrieb einer solchen Wasserzapfstelle nach Anspruch 9.

Aus dem Stand der Technik ist es bekannt, durch Öffnen eines Ventils Wasser an einer Wasserzapfstelle zu entnehmen. Zwei einzelne Ventile oder ein Mischventil stellen dabei die Durchflussmenge aus einer Kaltwasserleitung und einer Warmwasserleitung ein. Größter Warmwasserverbraucher in Wohngebäuden ist meistens die Dusche.

Eine Möglichkeit erhitztes Wasser auf der Seite der Warmwasserleitung bereitzustellen, ist ein Durchlauferhitzer. Ein solcher erhitzt das Wasser unmittelbar vor dem Verbrauch und ohne ein Zwischenspeichern in einem Wassertank. Als Energiequelle wird meistens Gas eingesetzt, das mit einem Gasbrenner des Durchlauferhitzers verbrannt wird. Die entstehende Verbrennungshitze wird auf das Wasser übertragen. Mit Hilfe von Brennwerttechnik gelingt es, die Effizienz zu steigern, indem die mit dem Abgasstrom entweichende Energiemenge minimiert wird.

Nachteilhaft an den bekannten Lösungen ist, dass dem Zapfer, z.B. einer duschenden Person, nicht bewusst ist, wieviel Wasser und Energie er verbraucht. Eine Selbstkontrolle erfolgt maximal anhand der Jahresabrechnung von Wasser und Gas.

Ein weiterer Nachteil ist, dass eine duschende Person von den Geschehnissen in der Wohnung isoliert ist, und vieles nicht mitbekommt, z.B. Geräusche. Weiterhin besteht oftmals der Wunsch nach einem angenehmen Duscherlebnis mit angenehmem Licht und Unterhaltung. Dies muss der Nutzer alles vorbereiten, was zeitintensiv und unkomfortabel ist. Dazu ist aus der DE 20 2009 003 820 U1 ein Duschkopf mit einer elektrischen Energiequelle und einem Duftversprühmechanismus bekannt.

Aufgabe der Erfindung ist es deshalb, eine Vorrichtung und ein Verfahren zu entwickeln, mit denen eine komfortable, transparente und sichere Wasserentnahme ermöglicht wird. Die Lösung soll möglichst kompakt, nachrüstbar und flexibel an die Anforderungen des Nutzers anpassbar sein.

### Offenbarung der Erfindung

Hauptmerkmale der Erfindung sind in den Ansprüchen 1, 7 und 9 angegeben. Ausgestaltungen sind Gegenstand der Ansprüche 2 bis 6, 8 und 10 bis 11 sowie der Beschreibung.

Die Erfindung betrifft eine Vorrichtung zur Fluidstromüberwachung und/oder zur Fluidstrommessung, mit einem Rohrleitungsstück mit einem Rohrkanal zwischen einer Eintrittsöffnung und einer Austrittsöffnung, einem Stromgenerator, mit dem Energie eines durch den Rohrkanal strömenden Fluids in elektrische Energie umwandelbar ist, einem Leuchtmittel, einem optionalen Temperatursensor, mit dem die Temperatur eines durch den Rohrkanal strömenden Fluids bestimmbar ist, einer mit dem Stromgenerator elektrisch verbundenen Steuereinrichtung, die eine drahtlose Datenschnittstelle und eine das Leuchtmittel ansteuernde Schalteinrichtung aufweist, wobei das wobei das Leuchtmittel, die Steuereinrichtung und - sofern vorhanden - ein Temperatursensor auf einer Leiterplatte angeordnet sind, wobei die Leiterplatte ringförmig ausgebildet ist, wobei die ringförmige Leiterplatte den Rohrkanal einfasst bzw. umgibt.

Vorteilhaft hieran ist, dass mit dieser Vorrichtung die Temperatur und/oder der Volumenstrom bzw. zumindest ein Strömungszustand (bspw. Ja/Nein) in dem Rohrkanal bestimmbar ist. Ein externer Stromanschluss ist nicht notwendig, was den Einsatz im Nassbereich eines Gebäudes ermöglicht. Auch ist die Nachrüstung hierdurch einfach. Zudem können mit dem Leuchtmittel Hinweise an Personen in der Umgebung der Vorrichtung ausgegeben werden. Die drahtlose Datenschnittstelle ermöglicht zusätzlich, externe Empfänger mit Informationen zu versorgen, z.B. mit Informationen über die Temperatur und/oder den Volumenstrom und/oder den Strömungszustand. In bestimmten Anwendungsbereichen genügt also auch eine Vorrichtung ohne Temperatursensor.

Weil eine Fluidstromüberwachung durch Messungen am Fluidstrom erfolgen kann, wird der Begriff "Vorrichtung zur Fluidstromüberwachung und/oder zur Fluidstrommessung" im Weiteren nur noch in der Kurzform "Vorrichtung zur Fluidstromüberwachung" verwendet.

Dadurch, dass das Leuchtmittel, der Temperatursensor und die Steuereinrichtung auf einer Leiterplatte angeordnet sind, ist die Vorrichtung sehr kompakt ausgestaltbar. Es ist aus diesem Grunde auch zu bevorzugen, einen Stromspeicher, sofern vorhanden, auf der Leiterplatte anzuordnen.

Dadurch, dass die Leiterplatte ringförmig ausgebildet ist und den Rohrkanal einfasst, ist die Vorrichtung kompakt und optisch ansprechend.

Gemäß einer näheren Ausgestaltung weist die Vorrichtung einen Stromspeicher auf, der elektrisch mit dem Stromgenerator und der Steuereinrichtung verbunden ist. Hierdurch ist es möglich zumindest kurzzeitig auch ohne Volumenstrom im Rohrkanal Daten über die Datenschnittstelle auszugeben oder das Leuchtmittel zu aktivieren. Der Stromspeicher weist vorzugsweise wenigstens einen Kondensator auf, und besteht besonders bevorzugt aus wenigstens einem Kondensator. Kondensatoren haben eine lange Lebensdauer und können eine gleichmäßige Stromversorgung der Verbraucher unterstützen.

Weiterhin ist bei einer Ausführungsform vorgesehen, dass die Datenschnittstelle eine Antenne aufweist. Damit können Daten besser versendet und empfangen werden. In einer bevorzugten Anordnung ist die Antenne auf der optionalen Leiterplatte angeordnet. Die Antenne kann dabei entweder ein aufgesetztes Bauteil sein oder aber sie ist durch eine Leiterbahn ausgebildet.

Energieeffizient, elektrisch sicher und kompakt ist eine Ausbildung, bei der das Leuchtmittel wenigstens eine lichtemittierende Diode (LED) aufweist. Zur Visualisierung unterschiedlicher Informationen, kann das Leuchtmittel wenigstens eine RGB-lichtemittierende Diode (RGB-LED) aufweisen.

Damit eine Person in der Umgebung ein Lichtsignal gut aus möglichst jedem Blickwinkel wahrnehmen kann, weist das Leuchtmittel bei einer speziellen Ausgestaltung einen Leuchtring auf, der der Rohrkanal einfasst. Ein ähnlicher Effekt wird durch eine alternative oder ergänzende Ausgestaltung erreicht, nach der das Leuchtmittel wenigstens zwei Leuchtquellen aufweist, die über den Umfang des Rohrleitungsstücks verteilt angeordnet sind, vorzugsweise gleichverteilt. Besonders bevorzugt sind exakt drei Leuchtquellen vorgesehen.

Optisch ansprechend und gut zu reinigen ist ein Design, bei dem das Rohrleitungsstück eine zylindrische Außenfläche aufweist. Zu bevorzugen ist dabei ein Design, bei dem das Rohrleitungsstück und das Leuchtmittel eine gemeinsame zylindrische Außenfläche ausbilden.

Für eine einfache Nachrüstbarkeit der Vorrichtung in bestehenden Duschen, kann optional vorgesehen sein, dass das Rohrleitungsstück an der Eintrittsöffnung und der Austrittsöffnung jeweils ein Gewinde aufweist. Hierbei handelt es sich vorzugsweise um ein Zollgewinde, weiter bevorzugt um ein 1/2, 3/8 oder 3/4 Zollgewinde. Besonders bevorzugt sind an der Eintrittsöffnung ein Innengewinde und an der Austrittsöffnung ein Außengewinde angeordnet. Damit die Vorrichtung nicht in der Dusche als störend wahrgenommen wird, beträgt der Abstand zwischen der Eintrittsöffnung und der Austrittsöffnung vorzugsweise maximal 10 cm. Die Nachrüstung ist besonders einfach, wenn der Rohrkanal zwischen der Eintrittsöffnung und der Austrittsöffnung linear verläuft.

Bei einer speziellen Ausgestaltung besteht das Rohrleitungsstück aus zwei zusammengesetzten Teilrohrstücken, wobei der optionale Leuchtring zwischen den zwei Teilrohrstücken angeordnet. Alternativ oder ergänzend kann vorgesehen sein, dass das Rohrleitungsstück aus zwei zusammengesetzten Teilrohrstücken besteht, wobei die optionale ringförmige Leiterplatte zwischen den beiden Teilrohrstücken angeordnet ist. Die Teilrohrstücke können jeweils beispielsweise miteinander verschraubt oder verklebt sein.

Die Erfindung betrifft außerdem eine Wasserzapfstelle mit einer Wasserleitung zwischen einem Ventil und einem Wasserauslass, wobei der Rohrkanal einer Vorrichtung zur Fluidstromüberwachung, wie sie vor- und nachstehend beschrieben ist, einen Leitungsabschnitt der Wasserleitung ausbildet.

Vorteilhaft hieran ist, dass mit der Vorrichtung zur Fluidstromüberwachung überwacht werden kann, welche Menge an Fluid mit welcher Temperatur durch den Rohrkanal strömt. Über die Datenschnittstelle und das Leuchtmittel können Personen und Drittgeräten Informationen bereitgestellt werden. Bei dem Ventil handelt es sich vorzugsweise um eine Mischbatterie. Der Wasserauslass ist bevorzugt ein Duschkopf. Mischbatterie und Duschkopf sind typische Bestandteile einer Dusche und die Vorrichtung zur Fluidstromüberwachung ermöglicht es, den Duschvorgang zu optimieren. Es ist besonders zu bevorzugen, dass die Wasserleitung zwischen der Vorrichtung zur Fluidstromüberwachung und dem Wasserauslass einen flexiblen Schlauchabschnitt aufweist. Außerdem ist die Vorrichtung zur Fluidstromüberwachung vorzugsweise direkt an dem Ventil befestigt.

Besondere Vorteile lassen sich mit der Vorrichtung zur Fluidstromüberwachung erzielen, wenn die Wasserzapfstelle vor dem Ventil einen Durchlauferhitzer aufweist. Bei diesen schwankt nämlich die Leistung unmittelbar in Abhängigkeit von dem Volumenstrom im Rohrkanal und dessen Temperatur. Zwischen dem Durchlauferhitzer und dem Wasserauslass sollte kein Wasserspeicher angeordnet sein. Bevorzugt weist der Durchlauferhitzer einen Gasbrenner zur Verbrennung von Gas auf. Mit Hilfe der Vorrichtung zur Volumenstromüberwachung kann die Effizienz des Durchlauferhitzers gesteigert werden. Hierzu weist der Durchlauferhitzer gemäß einer besonderen Ausführungsform einen Thermostat auf, der eine Datenverbindung mit der drahtlosen Datenschnittstelle der Vorrichtung hat, wobei das Thermostat und/oder der Durchlauferhitzer basierend auf Daten von der Datenschnittstelle der Vorrichtung einstellbar sind. Das Thermostat sollte über ein Kabel mit einer Steuereinheit des Durchlauferhitzers verbunden sein. Das Thermostat regelt die Heizleistung des Durchlauferhitzers, sodass eine definierte Temperatur erreicht wird. Mit Hilfe der Daten von der drahtlosen Datenschnittstelle kann beispielsweise diese definierte Temperatur angepasst werden.

Darüber hinaus kann die drahtlose Datenschnittstelle optional mit dem Internetnetzwerk verbunden sein. Hierdurch lassen sich in Abhängigkeit der ausgegebenen Daten beispielsweise Hausfunktionen über eine Haussteuerung aktivieren.

Ferner betrifft die Erfindung ein Verfahren zum Betrieb einer Wasserzapfstelle wie sie vor- und nachstehend beschrieben ist, das die folgend beschriebenen Schritte umfasst. Zunächst wird das Ventil geöffnet. Anschließend wird mit dem Stromgenerator elektrische Energie erzeugt. Daraufhin wird ein Parameter eines durch den Rohrkanal strömenden Fluides bestimmt. Vorzugsweise wird als Parameter die Temperatur mit einem Temperatursensor oder ein Strömungszustand mit dem Stromgenerator bestimmt, z.B. Strömung vorhanden (Ja/Nein) oder die Strömungsgeschwindigkeit. Über die drahtlose Datenschnittstelle der Steuereinrichtung werden Daten ausgegeben und/oder empfangen. Außerdem wird das Leuchtmittel mit der Schalteinrichtung basierend auf den Daten angesteuert.

Damit wird auf einfache Weise eine Überwachung des Fluidstroms ermöglicht und es können basierend hierauf eine Vielzahl an Ereignissen eingeleitet und/oder Einstellungen vorgenommen werden. Das Verfahren lässt sich hierdurch sehr gut an die individuellen Anforderungen anpassen. Je nach Anwendungsfall korrelieren die Daten mit dem bestimmten Parameter oder sind hiervon unabhängig.

In einer speziellen Verfahrenskonfiguration weist die Wasserzapfstelle vor dem Ventil einen Durchlauferhitzer mit einem Thermostat und es erfolgt ein Einstellen des Thermostats und/oder des Durchlauferhitzers basierend auf Daten von der Datenschnittstelle der Vorrichtung. Hierdurch lässt sich die Effizienz des Durchlauferhitzers steigern.

Eine Verfahrensvariante sieht vor, dass die drahtlose Datenschnittstelle mit einem Computer kommuniziert, auf dem eine Software zur Auswertung und/oder Beeinflussung der Daten installiert ist. Der Computer kann Teil des Thermostats des Durchlauferhitzers sein. Alternativ oder ergänzend kann die Software eine Gebäudesteuerungssoftware sein.

Des Weiteren können erfindungsgemäß unter anderem folgende Verfahrensoptionen realisiert werden:
- Einstellung des Durchlauferhitzers auf das momentane Effizienzoptimum. Hierdurch sollen vor allem der Kondensationsbetrieb erreicht und der Gasverbrauch reduziert werden;
- Reduktion der Heißwassersolltemperatur des Durchlauferhitzers bzw. dessen Thermostat auf einen Kondensationsbetrieb während das Ventil geöffnet ist;
- Ausgabe von Nutzerinformationen über den Zapfstart, das Zapfende, die Zapfdauer, der benötigten Gasmenge und/oder die Zapfkosten, beispielsweise am Thermostat des Durchlauferhitzers;
- Abschalten des Durchlauferhitzers nach einer definierten Zeit, um die Warmwasserentnahme zu stoppen. Damit lässt sich beispielsweise in Ferienwohnungen und Hotelzimmer übermäßiger Wasserkonsum verhindern;
- Identifikation der zapfenden Person und/oder der Wasserzapfstelle und individuelle Einstellung des Durchlauferhitzers basierend auf der identifizierten zapfenden Person und/oder der identifizierten Wasserzapfstelle;
- Ausgabe von Lichtsignalen über das Leuchtmittel zur Information über die Duschdauer, z.B. nach 15 Minuten;
- Ausgabe eines Alarmsignals, wenn das Ventil zu lange geöffnet ist, bspw. nach einer Stunde, um medizinische und/oder technische Hilfe anzufordern;
- Ausgabe eines Lichtsignals über das Leuchtmittel zur Indikation der Temperatur, vorzugsweise durch rotes Licht für heißes Wasser;
- Anzeige, dass der Durchlauferhitzer im Kondensationsbetrieb arbeitet über das Leuchtmittel;
- Anzeige darüber, dass die Hausklingel betätigt wurde, über das Leuchtmittel;
- Anzeige darüber, dass ein Telefon klingelt, über das Leuchtmittel;
- Anzeige unterschiedlicher Ereignisse durch unterschiedliche Leuchtfarben und oder Blinkgeschwindigkeiten;
- Ausgabe von Signalen, insbesondere IOT-Ereignisse, für andere Netzwerkteilnehmer eines Netzwerks. Derartige Ereignisse können beispielsweise sein:
   ∘ Ausgabe eines Signals bei einer gestarteten Stromerzeugung nach dem Öffnen des Ventils;
   ∘ Ausgabe eines Signals zum automatischen Verschließen von Gebäudezugängen;
   ∘ Ausgabe eines Signals zum Starten von Unterhaltungselektronik, z.B. Audio-oder Videogeräten;
   ∘ Ausgabe eines Signals zum Starten einer Lüftungsanlage;
   ∘ Ausgabe eines Signals zur Einstellung einer Raumbeleuchtung;
   ∘ Ausgabe eines Signals zur Generation einer Twitter-Nachricht;
   ∘ Ausgabe eines Signals zur Deaktivierung von Geräten, zum Beispiel einem Herd, Backofen, etc.;
   ∘ Ausgabe eines Signals zur Sperrung anderer Wasserzapfstellen;
   ∘ Ausgabe eines Signals zur Erzeugung einer Statusmitteilung in einem Messenger-Dienst oder einer sozialen Netzwerk-Plattform.
   ∘ Ausgabe eines Signals bei einer gestoppten Stromerzeugung nach dem Schließen des Ventils;
   ∘ Ausgabe eines Legionellen-Alarms, wenn für eine definierte Zeitspanne, beispielsweise mehr als drei Wochen, kein Wasser an der Wasserzapfstelle gezapft wurde;
   ∘ Ausgabe eines Legionellen-Alarms, wenn für eine definierte Zeitspanne keine hohen Temperaturen beim Zapfen erreicht wurden;
   ∘ Ausgabe eines Signals bei einer Stromerzeugung für eine definierte Dauer;
   ∘ Indikation des Verschließens des Ventils, durch Abbruch der Datenausgabe mit der drahtlosen Datenschnittstelle der Vorrichtung.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Wasserzapfstelle; und
- Fig. 2: eine Leiterplatte mit elektronischen Komponenten und einen Leuchtring einer Vorrichtung zur Fluidstromüberwachung, wie sie in der Wasserzapfstelle nach Fig. 1 enthalten ist.

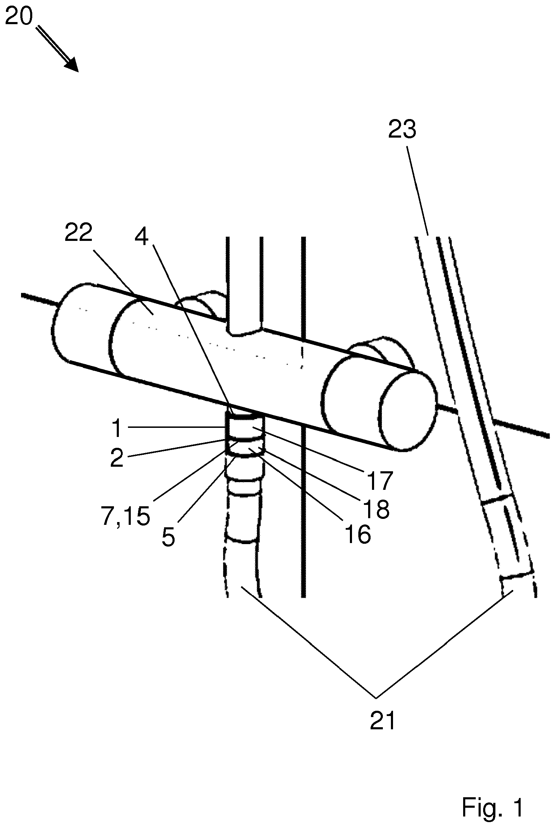

Fig. 1 zeigt eine Wasserzapfstelle 20 mit einer Wasserleitung 21, die ein Ventil 22 mit einem Wasserauslass 23 verbindet. Das Ventil 22 ist eine Mischbatterie einer Dusche. Der Wasserauslass 23 ist vorzugsweise ein Duschkopf, was jedoch nicht näher dargestellt ist. Die Wasserleitung 21 besteht im Wesentlichen aus einem flexiblen Schlauchabschnitt.

Nicht näher dargestellt sind außerdem die Kalt- und Warmwasserzuleitungen vor dem Ventil 22 und ein optionaler Durchlauferhitzer in der Warmwasserzuleitung.

Zwischen dem Ventil 22 und dem flexiblen Schlauchabschnitt der Wasserleitung 21 ist eine Vorrichtung 1 zur Fluidstromüberwachung angeordnet. Diese weist ein Rohrleitungsstück 2 mit einem linearen Rohrkanal zwischen einer Eintrittsöffnung 4 und einer Austrittsöffnung 5. Der Rohrkanal bildet einen Leitungsabschnitt der Wasserleitung 21 aus. Das Rohrleitungsstück 2 wiederum besteht aus zwei zusammengesetzten Teilrohrstücken 17, 18 und bildet eine zylindrische Außenfläche 16 aus.

Die Vorrichtung 1 verfügt über einen Stromgenerator, insbesondere einen Hydrogenerator, mit dem Energie eines durch den Rohrkanal strömenden Fluides in elektrische Energie umwandelbar ist. Außerdem weist die Vorrichtung 1 ein Leuchtmittel 7 auf, von dem in Fig. 1 ein Leuchtring 15 erkennbar ist, der den Rohrkanal einfasst. Der Leuchtring 15 ist zwischen den zwei Teilrohrstücken 17, 18 angeordnet und das Rohrleitungsstück 2 und das Leuchtmittel 7 bilden die zylindrische Außenfläche 16 gemeinsam aus.

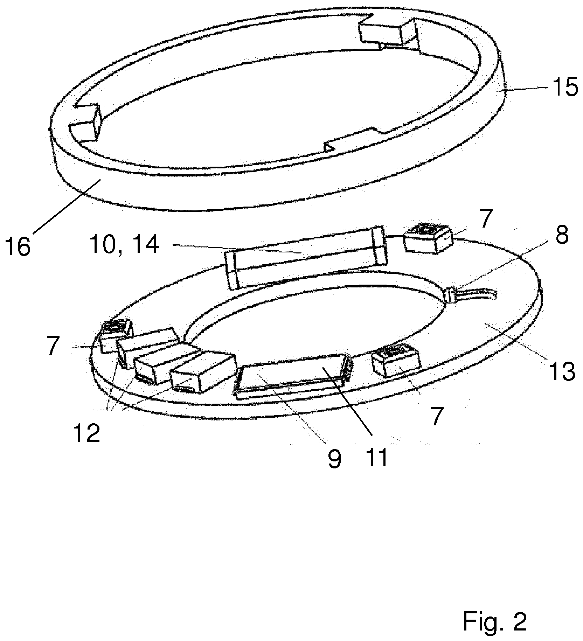

In der Explosionsdarstellung nach Fig. 2 erkennt man technische Details der Ausgestaltung nach Fig. 1, die sich hinter dem äußerlich sichtbaren Leuchtring 15 verbergen. Hier erkennt man die zylindrische Außenfläche 16 des Leuchtrings 15. Der Leuchtring 15 ist beabstandet zu einer Leiterplatte 13 gezeigt und fasst die Leiterplatte 13 nach der Montage ein.

Auf der ringförmigen Leiterplatte 13, welche ebenfalls den Rohrkanal einfasst bzw. umgibt, sind über den Umfang gleichverteilt drei Leuchtquellen des Leuchtmittels 7 angeordnet. Hierbei handelt es sich jeweils um RGB-lichtemittierende Dioden (RGB-LED). Über Koppelstellen des Leuchtrings 15 wird emittiertes Licht verhältnismäßig gleichmäßig über den Umfang der Außenfläche 16 des Leuchtrings 15 verteilt.

Außerdem sitzt auf der Leiterplatte 13 ein Temperatursensor 8, mit dem die Temperatur eines durch den Rohrkanal strömenden Fluides bestimmbar ist. Man erkennt des Weiteren auf der Leiterplatte 13 eine Steuereinrichtung 9, die elektrisch mit einem nicht dargestellten Stromgenerator verbunden ist, und eine drahtlose Datenschnittstelle 10 sowie eine das Leuchtmittel 7 ansteuernde Schalteinrichtung 11 aufweist. Die Datenschnittstelle 10 weist eine Antenne 14 auf.

Ferner weist die Vorrichtung 1 einen Stromspeicher 12 auf, der ebenfalls auf der Leiterplatte 13 platziert sowie elektrisch mit dem Stromgenerator und der Steuereinrichtung 9 verbunden ist. Vorliegend wird der Stromspeicher 12 von drei Kondensatoren ausgebildet.

Die von Fig. 2 gezeigte ringförmige Leiterplatte 13 ist in Fig. 1 entsprechend dem Leuchtring 15 zwischen den beiden Teilrohrstücken 17, 18 angeordnet ist, was jedoch nicht erkennbar ist.

Wenn nunmehr das Ventil 22 der Wasserzapfstelle 20 gemäß Fig. 1 geöffnet wird, strömt Wasser durch den Rohrkanal der Vorrichtung 1 zur Fluidstromüberwachung. Der Stromgenerator erzeugt dann Strom und aktiviert die elektrischen Bauteile auf der Leiterplatte 13. Das ermöglicht eine Bestimmung der Temperatur des durch den Rohrkanal strömenden Wassers mit dem Temperatursensor 8 und die Ausgabe und/oder den Empfang von Daten über die drahtlose Datenschnittstelle 10 der Steuereinrichtung. Basierend auf den Daten kann das Leuchtmittel 7 mit der Schalteinrichtung 9 angesteuert werden. Allein das reicht, um das Bewusstsein des Verbrauchers für den Warmwasserverbrauch und die notwendige Energie zu schärfen.

Ergänzend können externe Geräte mit der Vorrichtung korrespondieren. Das ist von besonderem Vorteil, wenn die Wasserzapfstelle 20 vor dem Ventil 22 einen Durchlauferhitzer mit einem Thermostat aufweist, wobei das Thermostats und/oder des Durchlauferhitzers basierend auf Daten von der Datenschnittstelle 10 der Vorrichtung 1 eingestellt werden. Hierdurch kann die Effizienz aktiv gesteigert werden.

Vielfache individuelle Anforderungen lassen sich realisieren, wenn die drahtlose Datenschnittstelle 10 mit einem Computer kommuniziert, auf dem eine Software zur Auswertung installiert ist.

## Patentansprüche

1. **Vorrichtung** (1) zur Fluidstromüberwachung und/oder zur Fluidstrommessung, mit
- einem Rohrleitungsstück (2) mit einem Rohrkanal zwischen einer Eintrittsöffnung (4) und einer Austrittsöffnung (5),
- einem Stromgenerator, mit dem Energie eines durch den Rohrkanal strömenden Fluides in elektrische Energie umwandelbar ist,
- einem Leuchtmittel (7),
- einer mit dem Stromgenerator elektrisch verbundenen Steuereinrichtung (9),
∘ die eine drahtlose Datenschnittstelle (10) und
∘ eine das Leuchtmittel (7) ansteuernde Schalteinrichtung (11) aufweist,
- einer Leiterplatte (13),
wobei das Leuchtmittel (7), die Steuereinrichtung (9) und sofern vorhanden ein Temperatursensor (8) auf der Leiterplatte (13) angeordnet sind, wobei die Leiterplatte (13) ringförmig ausgebildet ist, **dadurch gekennzeichnet, dass** die ringförmige Leiterplatte (13) den Rohrkanal einfasst bzw. umgibt.

2. Vorrichtung nach Anspruch 1, **dadurch gekennzeichnet, dass** diese einen Temperatursensor (8) aufweist, mit dem die Temperatur eines durch den Rohrkanal strömenden Fluides bestimmbar ist.

3. Vorrichtung nach einem der Ansprüche 1 oder 2, **dadurch gekennzeichnet, dass** diese einen Stromspeicher (12) aufweist, der elektrisch mit dem Stromgenerator und der Steuereinrichtung (9) verbunden ist.

4. Vorrichtung nach einem der vorhergehenden Ansprüche, **dadurch gekennzeichnet, dass** die Datenschnittstelle (10) eine Antenne (14) aufweist.

5. Vorrichtung nach einem der vorhergehenden Ansprüche, **dadurch gekennzeichnet, dass** das Leuchtmittel (7) wenigstens eine lichtemittierende Diode (LED) aufweist.

6. Vorrichtung nach einem der vorhergehenden Ansprüche, **dadurch gekennzeichnet, dass** das Leuchtmittel (7) einen Leuchtring (15) aufweist, der den Rohrkanal einfasst.

7. **Wasserzapfstelle** (20) mit einer Wasserleitung (21) zwischen einem Ventil (22) und einem Wasserauslass (23), und mit einer Vorrichtung (1) nach einem der vorhergehenden Ansprüche, wobei der Rohrkanal der Vorrichtung (1) einen Leitungsabschnitt der Wasserleitung (21) ausbildet.

8. Wasserzapfstelle (20) nach Anspruch 7, **dadurch gekennzeichnet, dass** diese vor dem Ventil (22) einen Durchlauferhitzer aufweist.

9. **Verfahren** zum Betrieb einer Wasserzapfstelle (20) nach einem der Ansprüche 7 oder 8, umfassend die Schritte:
a) Öffnen des Ventils (22),
b) Erzeugen von elektrischer Energie mit dem Stromgenerator,
c) Bestimmen eines Parameters eines durch den Rohrkanal strömenden Fluides, vorzugsweise einer Temperatur mit einem Temperatursensor (8) oder eines Strömungszustands mit dem Stromgenerator,
d) Ausgabe und/oder Empfang von Daten über die drahtlose Datenschnittstelle (10) der Steuereinrichtung (9), und
e) Ansteuern des Leuchtmittels (7) mit der Schalteinrichtung (9) basierend auf den Daten.

10. Verfahren nach Anspruch 9, wobei die Wasserzapfstelle (20) vor dem Ventil (22) einen Durchlauferhitzer mit einem Thermostat aufweist, umfassend den folgenden Schritt:
f) Einstellen des Thermostats und/oder des Durchlauferhitzers basierend auf Daten von der Datenschnittstelle (10) der Vorrichtung (1).

11. Verfahren nach einem der Ansprüche 9 oder 10, wobei die drahtlose Datenschnittstelle (10) mit einem Computer kommuniziert, auf dem eine Software zur Auswertung installiert ist.

## Claims

1. **Device** (1) for fluid flow monitoring and/or for fluid flow measurement, comprising
- a pipeline section (2) having a tubular channel between an inlet opening (4) and an outlet opening (5),
- a power generator, with which energy of a fluid flowing through the tubular channel can be converted into electrical energy,
- a lighting means (7),
- a control device (9) electrically connected to the power generator,
o which has a wire-free data interface (10) and
o a switching device (11) activating the lighting means (7),
- a printed circuit board (13),
wherein the lighting means (7), the control device (9) and, if present, a temperature sensor (8) are arranged on the printed circuit board (13), wherein the printed circuit board (13) is ring-shaped, **characterized in that** the ring-shaped printed circuit board (13) encompasses or surrounds the tubular channel.

2. Device according to Claim 1, **characterized in that** it has a temperature sensor (8), with which the temperature of a fluid flowing through the tubular channel can be determined.

3. Device according to either of Claims 1 and 2, **characterized in that** it has a power store (12), which is connected electrically to the power generator and the control device (9).

4. Device according to one of the preceding claims, **characterized in that** the data interface (10) has an antenna (14).

5. Device according to one of the preceding claims, **characterized in that** the lighting means (7) has at least one light-emitting diode (LED).

6. Device according to one of the preceding claims, **characterized in that** the lighting means (7) has a lighting ring (15), which encompasses the tubular channel.

7. **Water tapping point** (20) having a water line (21) between a valve (22) and a water outlet (23), and having a device (1) according to one of the preceding claims, wherein the tubular channel of the device (1) forms a line section of the water line (21).

8. Water tapping point (20) according to Claim 7, **characterized in that** it has a flow heater upstream of the valve (22).

9. **Method** for operating a water tapping point (20) according to either of Claims 7 and 8, comprising the steps:
a) opening the valve (22),
b) generating electrical energy by using the power generator,
c) determining a parameter of a fluid flowing through the tubular channel, preferably a temperature by using a temperature sensor (8) or a flow state by using the power generator,
d) outputting and/or receiving data via the wire-free data interface (10) of the control device (9), and
e) activating the lighting means (7) by using the switching device (9) on the basis of the data.

10. Method according to Claim 9, wherein the water tapping point (20) upstream of the valve (22) has a flow heater with a thermostat, comprising the following step:
f) setting the thermostat and/or the flow heater on the basis of data from the data interface (10) of the device (1).

11. Method according to either of Claims 9 and 10, wherein the wire-free data interface (10) communicates with a computer on which evaluation software is installed.

## Revendications

1. Dispositif (1) de surveillance de courant de fluide et/ou de mesure de courant de fluide, ledit dispositif comprenant
- une pièce de canalisation (2) pourvue d'un conduit tubulaire entre une ouverture d'entrée (4) et une ouverture de sortie (5),
- un générateur de courant permettant de convertir l'énergie d'un fluide s'écoulant à travers le conduit tubulaire en énergie électrique,
- une moyen d'éclairage (7),
- un module de commande (9) relié électriquement au générateur de courant,
∘ qui comporte une interface de données sans fil (10) et
∘ un module de commutation (11) qui commande le moyen d'éclairage (7),
- une carte de circuit imprimé (13),
le moyen d'éclairage (7), le module de commande (9) et, le cas échéant, un capteur de température (8) étant disposés sur la carte de circuit imprimé (13), la carte de circuit imprimé (13) étant en forme d'anneau, **caractérisé en ce que** la carte de circuit imprimé en forme d'anneau (13) renferme ou entoure le conduit tubulaire.

2. Dispositif selon la revendication 1, **caractérisé en ce qu'**il comporte un capteur de température (8) permettant de déterminer la température d'un fluide s'écoulant à travers le conduit tubulaire.

3. Dispositif selon l'une des revendications 1 et 2, **caractérisé en ce qu'**il comporte un accumulateur de courant (12) qui est relié électriquement au générateur d'énergie et au module de commande (9).

4. Dispositif selon l'une des revendications précédentes, **caractérisé en ce que** l'interface de données (10) comporte une antenne (14).

5. Dispositif selon l'une des revendications précédentes, **caractérisé en ce que** le moyen d'éclairage (7) comporte au moins une diode photoémettrice (LED).

6. Dispositif selon l'une des revendications précédentes, **caractérisé en ce que** le moyen d'éclairage (7) comporte un anneau lumineux (15) qui borde le conduit tubulaire.

7. Point de captage d'eau (20) comprenant une conduite d'eau (21) entre une vanne (22) et une sortie d'eau (23), et un dispositif (1) selon l'une des revendications précédentes, le conduit tubulaire du dispositif (1) formant une portion de la conduite d'eau (21) .

8. Point de captage d'eau (20) selon la revendication 7, **caractérisé en ce qu'**il comporte un chauffe-eau à écoulement libre devant la vanne (22).

9. Procédé de fonctionnement d'un point de captage d'eau (20) selon l'une des revendications 7 et 8, ledit procédé comprenant les étapes suivantes :
a) ouvrir la vanne (22),
b) générer de l'énergie électrique avec le générateur de courant,
c) déterminer un paramètre d'un fluide s'écoulant à travers le conduit tubulaire, de préférence une température à l'aide d'un capteur de température (8) ou un état d'écoulement à l'aide du générateur de courant,
d) délivrer et/ou recevoir des données par le biais de l'interface de données sans fil (10) du module de commande (9), et
e) commander le moyen d'éclairage (7) avec le module de commutation (9) sur la base des données.

10. Procédé selon la revendication 9, le point de captage d'eau (20) comportant devant la vanne (22) un chauffe-eau à écoulement libre muni d'un thermostat, ledit procédé comprenant l'étape suivante :
f) régler le thermostat et/ou le chauffe-eau à écoulement libre sur la base des données provenant de l'interface de données (10) du dispositif (1).

11. Procédé selon l'une des revendications 9 et 10, l'interface de données sans fil (10) communiquant avec un ordinateur sur lequel est installé un logiciel d'évaluation.
